# EUROPEAN PATENT SPECIFICATION

(11) **EP 3 132 318 B1**
(45) Date of publication and mention of the grant of the patent: **26.10.2022**
(21) Application number: 15706770.3
(22) Date of filing: 23.02.2015
(51) Int. Cl.: G06F 21/42, G06F 21/60

(54) **MOBILE HUMAN MACHINE INTERFACE FOR CONTROL DEVICES**
MOBILE MENSCH-MASCHINEN-SCHNITTSTELLE FÜR STEUERGERÄTE
INTERFACE HOMME-MACHINE MOBILE DESTINÉE À DES DISPOSITIFS DE COMMANDE

(30) Priority: 16.04.2014 EP 14164952
(43) Date of publication of application: 22.02.2017
(73) Proprietor: Hitachi Energy Switzerland AG, 5400 Baden (CH)
(72) Inventor: FERRANTI, Ettore, CH-8165 Schleinikon (CH); NAEDELE, Martin, CH-8050 Zürich (CH)
(74) Representative: Vossius & Partner Patentanwälte Rechtsanwälte mbB
(86) International application number: PCT/EP2015/053680
(87) International publication number: WO 2015/158453

(56) References cited:
- EP-A1- 2 685 329
- WO-A1-2010/102875
- GB-B- 2 422 234
- US-A- 5 598 572
- US-B2- 7 043 310

## Description

### FIELD OF THE INVENTION

The invention relates to the field of substation automation. Specifically, it relates to a method of configuring or servicing a plurality of substation automation control devices.

### BACKGROUND OF THE INVENTION

A power distribution system is the interface between the power transmission network and the electricity end-customers and comprises a number of primary substations with transformers that reduce the voltage from an HV level of a transmission grid down to MV levels suitable for regional power distribution. System operation involves secondary devices interacting with primary equipment of the substations and power lines such as switches, tap changers, capacitor banks and the like. A Substation Automation (SA) system responsible for controlling, protecting, measuring and monitoring comprises the secondary devices interconnected in a SA communication network and interacting with the primary devices via a process interface.

In automated power transmission and distribution systems, the secondary devices comprise microprocessor-based programmable electronic devices or digital relays, also termed Intelligent Electronic Devices (IED), that are capable of sending control signals to switching devices. Most digital relays in use today combine protection, control, monitoring, communication, power quality monitoring, and metering capabilities. The protection functions supported by a digital relay may include bus-bar protection functionality, time delay and instantaneous over-current functions for phase and ground elements, sequence directional over-current functions, reclosing functions, over- and under-frequency protection functions, and over- and under-voltage protection functions. Digital relay devices also support various metering functions; monitoring of voltage sags, swells, and interruptions; fault location algorithms; and oscillographic record storage. The IEDs have a dedicated local Human Machine Interface (HMI) per device, mounted on a front panel of the device or on a cabinet containing the device. The IEDs are configured locally using the local HMI or remotely using a settings software tool. In many cases the required protection functionality is preloaded into the relay device, and later enabled and parameterised with a configuration tool connected to the relay device.

Patent application US 2009/0210197 discloses a meter and assigned data logger connected to a data collector via communication network, i.e. either a common cable or a mobile/wireless network. The data collector is immobile and the individual communication paths via the network are permanent. The data collector is linked to data storage module through a communication network that may be wireless and use GSM. While incoming power consumption data from the various data loggers is permanently stored and analyzed at the data storage module, the latter does not provide any analysis result or other feedback to the data logger or data collector.

Patent application US 2013/0314246 discloses an IED with a sensor coupled to an electrical circuit of a power distribution network for measuring a power parameter e.g. voltage, of the electrical circuit. A processor detects an event and retrieves a digital file associated with the detected event from a removable memory of the IED or from a remote event server, based on an event code transmitted to the server when the event occurs. A display of the IED, e.g. LCD or touch screen, receives a digital file from the processor and plays the retrieved digital file to provide graphic indication of the event detected by the processor, including visual and audible trouble shooting instructions. The communication with the remote server is also used to provide IED firmware updates so as to upgrade operating instructions or program code.

The patent US 7043310 B1 discloses parallel UMTS communication from a cell phone with a simple HMI to plural automation components, as well as to a facility server providing data or workflows to an operator for commissioning and/or servicing an automation component.

The patent US 5598572 discloses a portable terminal device with an ultrasonic "location and direction sensor" to be pointed to a single automation component, and a component inquiry unit providing a component ID for further communication to the component via unique network. Pointing the portable terminal device does not require a local activation, at the automation component, of a first communication channel by an operator.

### DESCRIPTION OF THE INVENTION

It is therefore an objective of the invention to increase flexibility in accessing a plurality of Intelligent Electronic Devices IEDs or automation devices of a substation for configuration or servicing purposes. This objective is achieved by a substation automation system and a mobile HMI device according to the independent claims. Preferred embodiments are evident from the dependent patent claims.

According to the invention, a mobile Human Machine Interface HMI device wirelessly connected to the IEDs and a system server acts as a single point of access for a human engineer or operator and constitutes a flexible platform or interface for exchange, under control/supervision of the human, of local IED information and central system information. The human thus has real-time access to both local process data and central configuration or expert data. The mobile HMI for automation devices with a wireless communication infrastructure constitutes a flexible information presentation and communication system. Sharing of a single mobile HMI among peer IEDs supplants the need for dedicated local HMIs including display units permanently connected to the IEDs and results in cost savings. New value adding services supporting the human are enabled, such as interactive chat, audio, or video conferencing with a support expert at the system server location. To this end the system server may be a remote collaboration tool running a service support application configured to accept input from a human expert as server response data. More and new types of information may be provided to the personnel configuring or servicing automation devices, which ultimately speeds up maintenance response, reduces errors, and reduces the amount of equipment required.

Specifically, a substation automation system for monitoring, controlling, and/or protecting of primary equipment of a substation comprises
- an IED configured to perform a protection function on behalf of the substation and adapted to exchange IED data, i.e. to transmit IED source data and receive IED destination data, via a first communication channel,
- a system server adapted to exchange, i.e. to transmit and receive server data via a second communication channel, and
- a mobile HMI device such as a laptop or tablet computer or a smartphone adapted to wirelessly communicate, via the first and second communication channel, with the IED and with the system server, respectively, and running, or executing, an IED application, or function, configured to display configuration or operational IED source data and to accept configuration or command IED destination data from the human engineer or operator, and running a server application configured to display server data including documentation or interactive support information.

In a preferred variant of the invention the server application is configured to accept server request data input by a human, or provided in an automated manner by the IED application, and to display server response data responsive to the server request data. The requested information from the system server thus is synchronized with IED source data at all times.

In an advantageous embodiment, the mobile HMI device is configured to prohibit, or exclude, server response data from being provided automatically, i.e. without manual intervention or confirmation by an operator, such as re-typing passwords or copying setting groups, to the IED application. A strict separation, possibly including application level separation, operating system level partitioning or even separate processors and memory spaces, between the IED application and the server application on the mobile HMI precludes any unwanted remote control of the IED from the server, and thus amply responds to cyber security concerns.

In another advantageous embodiment, the first communication channel includes short-range wireless (e.g. Near-Field Communication NFC, Wireless Local Area Network WLAN, Bluetooth, IEEE 802.15.4) communication between a corresponding first wireless communication port, or antenna, of the HMI device and the IED or an access point or router in the substation. The second communication channel includes extended-range mobile telecommunication (GSM, EDGE, GPRS) and a corresponding second communication port at the mobile HMI. Having two separate ports at the mobile HMI further contributes to the aforementioned objective of preventing unauthorized information from flowing between the two communication channels.

In another advantageous embodiment, the system server is a documentation server of the automation system storing information such as operating manuals or spare part listings about the IED, and the server request data including an IED identifier is provided automatically by the IED application.

In another advantageous embodiment, the server request data includes sensor data provided by a sensor of, or coupled to, the mobile HMI device. The sensor data may include a temperature reading, audio signal, video signal, location or proximity information provided by a temperature sensor, microphone, camera, GPS or proximity module, respectively. The sensor data may relate to ambient conditions at, or near, the mobile HMI device, or provide information about the IED or about the primary system other than the IED source data transmitted over the wireless communication channel. For instance, the sensor data may comprise a picture of a piece of primary equipment. The system server is configured to evaluate, or diagnose, the sensor data and transmit server response data in response there to.

In a further preferred variant of the invention the automation system comprises a plurality of IEDs that are adapted to be selected for data exchange with the mobile HMI device by accepting a local activation, by the human, of the first communication channel. Selection may occur at the target IED via a mechanical, binary, on-off switch setting, or via selective connection of a removable NFC, WLAN, or Bluetooth antenna connection. Alternatively, a directional infrared link, or a proximity identification by means of an optical bar code reader may be used to provide IED selectivity. On the other hand, permanently wiring a plurality of IEDs to a single WLAN access point for accessing the first wireless communication channel requires more complex IED selectivity mechanisms involving both the WLAN access point and the mobile HMI device.

In a further preferred variant of the invention the IED is devoid of an alphanumeric display unit, and at most includes a local HMI with a binary device on/off switch, selection switch for wireless communication as mentioned above, reset switch, or LED failure indicators.

The present invention also relates to a computer program product including computer program code for controlling one or more processors of a mobile HMI device adapted to communicate, via wireless communication channels, with an IED and with a system server, particularly, a computer program product including a computer readable medium containing therein the computer program code.

### DETAILED DESCRIPTION OF PREFERRED EMBODIMENTS

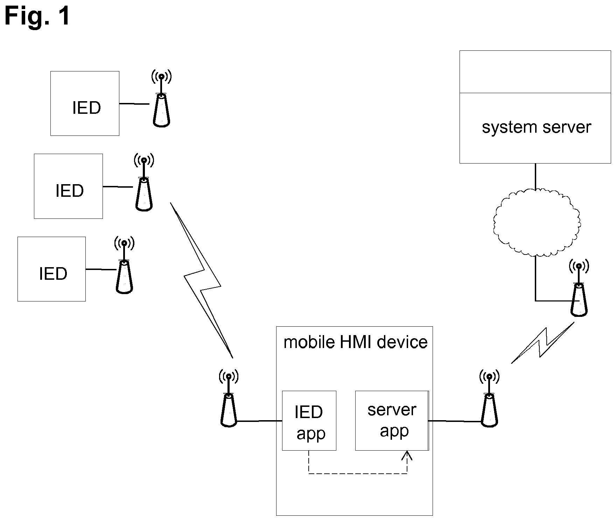

Fig.1 schematically shows an exemplary automation system with three Intelligent Electronic Devices IEDs, a mobile HMI device, a system server and two wireless communication channels interconnecting the mobile HMI device and the IEDs or the system server, respectively. On the mobile HMI device, an IED or engineering application is instantiated and handles the IED data, whereas a server application handles server data from the system server. Information flow from the IED application to the server application is enabled without limitation (broken line).

The following paragraphs disclose aspects of the invention.

An automation system includes a mobile device (e.g. smartphone) and one or multiple automation devices (e.g. substation automation IEDs) and a wireless communication infrastructure between them (e.g. NFC, Bluetooth, WLAN) and an IED application ("engineering app") displayed on the mobile device, which allows to read and edit information on the IED. The mobile device has a communication channel to the automation device. The mobile device has an additional communication channel, which allows other applications running on the device to talk to a system, or second, server (or more additional servers at the same time). The application or applications on the mobile device strictly separate information flows thus that no unauthorized information can flow between the two channels.

The second server is a documentation server that provides manuals and similar documents to the user. The manuals presented and the sections/information shown is synchronized with the tasks the user executes on the engineering app.

The second server is a remote collaboration tool that allows sensing, screen sharing, written, visual, and/or oral real-time communication between the user of the mobile application and a remote user, e.g. a service expert.

The second server is an interactive troubleshooting/diagnosis application, which guides the user and can also read device status information and run diagnosis algorithms on the remote backend of the second server.

The second server is an archiving/historian application that is able to playback earlier datapoints, settings, configurations, or disturbance reports.

The server application and / or second server make use of data generated by sensors in or attached to the mobile device (e.g. sound analysis, image recognition, video analysis, vibration sensors, infrared thermal imaging). The data generated and / or other information collected (GPS) is used to localise the technician and guide her towards the IED to be serviced.

The IED application contains client side functionality to authenticate the user to the device, e.g. a client certificate, a password entry facility, or biometric sensors (fingerprint, camera, voice).

The first communication channel between the mobile device and the automation device may also share short-range wireless (e.g. WLAN, Bluetooth, NFC, IEEE 802.15.4) communication to an access point or router in the substation with the second communication channel. The latter may then include extended-range mobile telecommunication channels (GSM, EDGE, GPRS) or a digital subscriber line between the access point and the second server. In such case both communication channels run initially over the same short-range wireless infrastructure, but as separate tunnels/virtual networks with separate endpoints in the automation device and the second server.

The second server is used to remotely process the technician's vocal input in order to give speech recognition capabilities to the mobile device, so that it can be used in a hands-free fashion.

The second server is used to store different configurations for different IEDs. The configurations can then be selected from it and remotely uploaded to the mobile device, which can then in turn upload one of them to the controlled IED.

The mobile device is used to notify the technician about specific events (e.g. breaker opening) happening at the remote IED. In case a single mobile device is connected to multiple IEDs, the technician is notified about events happening on all of IEDs, in a publish/subscribe fashion.

## Claims

1. A mobile Human Machine Interface HMI device adapted to wirelessly communicate,
via a first communication channel, with an Intelligent Electronic Device IED configured to perform a protection function for a substation and to exchange IED data via the first communication channel, and
adapted to wirelessly communicate, via a second communication channel, with a system server configured to exchange server data via the second communication channel,
the mobile HMI running an IED application configured to display IED source data and accept IED destination data, and running a server application configured to display server data, ,
wherein the IED application and/or server application strictly separate the information flows to the first and the second communication channel thus that no unauthorized information flows between the first and second communication channel,
wherein the server application is configured to accept server request data and to display server response data responsive to the server request data,
wherein the HMI device is adapted to receive confirmatory input from an operator of the mobile HMI device before server response data transmitted to the mobile HMI device from the system server is provided to the IED application,
wherein the server response data is prohibited from being provided to the IED application without manual intervention by the operator of the mobile HMI device.

2. A substation automation system comprising the mobile HMI device according to claim 1 and further comprising:
- the Intelligent Electronic Device IED configured to perform the protection function for the substation and adapted to exchange IED data via the first communication channel,
- the system server adapted to exchange server data via the second communication channel.

3. The system of claim 2, wherein the HMI device has a first wireless communication port as part of the first communication channel, and another, second wireless communication port as part of the second communication channel.

4. The system of claim 2, wherein the system server is a documentation server of the automation system, and wherein the server request data is provided by the IED application.

5. The system of claim 2, wherein the server request data includes sensor data provided by a sensor coupled to the mobile HMI device, and wherein the system server is configured to analyse the sensor data and transmit server response data in response there to.

6. The system of any of claims 2 to 5 comprising a plurality of IEDs adapted to be selected for data exchange with the mobile HMI device by accepting a local activation at each IED of the plurality of IEDs, by a human, of the first communication channel.

7. The system of any of claims 2 to 5, wherein the system server is running a service application configured to accept input from a human as the server response data.

8. The system of any of claims 2 to 5, wherein the IED is devoid of an alphanumeric display unit.

## Patentansprüche

1. Mobile Mensch-Maschinen-Schnittstelle- bzw. HMI-Vorrichtung, eingerichtet zum drahtlosen Kommunizieren,
über einen ersten Kommunikationskanal, mit einer intelligenten elektronischen Vorrichtung IED, ausgelegt zum Durchführen einer Schutzfunktion für ein Umspannwerk und zum Austauschen von IED-Daten über den ersten Kommunikationskanal, und
eingerichtet zum drahtlosen Kommunizieren, über einen zweiten Kommunikationskanal, mit einem Systemserver, ausgelegt zum Austauschen von Serverdaten über den zweiten Kommunikationskanal,
wobei die mobile HMI eine IED-Anwendung ausführt, ausgelegt zum Anzeigen von IED-Quellendaten und Annehmen von IED-Zieldaten, und eine Serveranwendung ausführt, ausgelegt zum Anzeigen von Serverdaten,
wobei die IED-Anwendung und/oder die Serveranwendung die Informationsflüsse zu dem ersten und dem zweiten Kommunikationskanal streng trennen, sodass keine unautorisierten Informationen zwischen dem ersten und dem zweiten Kommunikationskanal fließen,
wobei die Serveranwendung dazu ausgelegt ist, Serveranforderungsdaten anzunehmen und Serverantwortdaten als Reaktion auf die Serveranforderungsdaten anzuzeigen,
wobei die HMI-Vorrichtung dazu eingerichtet ist, eine Bestätigungseingabe von einem Bediener der mobilen HMI-Vorrichtung zu empfangen, bevor der IED-Anwendung Serverantwortdaten bereitgestellt werden, die von dem Systemserver an die mobile HMI-Vorrichtung übertragen werden,
wobei verhindert wird, dass die Serverantwortdaten ohne manuelles Eingreifen durch den Bediener der mobilen HMI-Vorrichtung der IED-Anwendung bereitgestellt werden.

2. Umspannwerk-Automatisierungssystem, das die mobile HMI-Vorrichtung nach Anspruch 1 aufweist und ferner Folgendes aufweist:
- die intelligente elektronische Vorrichtung IED, ausgelegt zum Durchführen einer Schutzfunktion für das Umspannwerk und eingerichtet zum Austauschen von IED-Daten über den ersten Kommunikationskanal,
- den Systemserver, eingerichtet zum Austauschen von Serverdaten über den zweiten Kommunikationskanal.

3. System nach Anspruch 2, wobei die HMI-Vorrichtung einen ersten Drahtloskommunikationsport als Teil des ersten Kommunikationskanals und einen anderen, zweiten Drahtloskommunikationsport als Teil des zweiten Kommunikationskanals aufweist.

4. System nach Anspruch 2, wobei der Systemserver ein Dokumentationsserver des Automatisierungssystems ist und wobei die Serveranforderungsdaten durch die IED-Anwendung bereitgestellt werden.

5. System nach Anspruch 2, wobei die Serveranforderungsdaten Sensordaten enthalten, die durch einen mit der mobilen HMI-Vorrichtung gekoppelten Sensor bereitgestellt werden, und wobei der Systemserver dazu ausgelegt ist, die Sensordaten zu analysieren und Serverantwortdaten als Reaktion darauf zu übertragen.

6. System nach einem der Ansprüche 2 bis 5, aufweisend mehrere IEDs, die dazu eingerichtet sind, zum Datenaustausch mit der mobilen HMI-Vorrichtung ausgewählt zu werden, indem eine lokale Aktivierung an jeder IED der mehreren IEDs, durch eine Person, des ersten Kommunikationskanals angenommen wird.

7. System nach einem der Ansprüche 2 bis 5, wobei der Systemserver eine Dienstanwendung ausführt, ausgelegt zum Annehmen einer Eingabe von einer Person als die Serverantwortdaten.

8. System nach einem der Ansprüche 2 bis 5, wobei die IED keine alphanumerische Anzeigeeinheit aufweist.

## Revendications

1. Dispositif d'interface homme-machine HMI mobile adapté pour communiquer en mode sans fil, par l'intermédiaire d'un premier canal de communication, avec un dispositif électronique intelligent IED configuré pour réaliser une fonction de protection d'une sous-station et échanger des données d'IED par l'intermédiaire du premier canal de communication, et
adapté pour communiquer en mode sans fil, par l'intermédiaire d'un second canal de communication, avec un serveur de système configuré pour échanger des données de serveur par l'intermédiaire du second canal de communication,
la HMI mobile exécutant une application d'IED configurée pour afficher des données source d'IED et accepter des données de destination d'IED, et exécutant une application de serveur configurée pour afficher des données de serveur,
dans lequel l'application d'IED et/ou l'application de serveur séparent strictement les flux d'informations vers le premier et le second canal de communication, de façon à ce qu'aucune information non autorisée ne circule entre le premier et le second canal de communication,
dans lequel l'application de serveur est configurée pour accepter des données de demande de serveur et afficher des données de réponse de serveur en réponse aux données de demande de serveur,
dans lequel le dispositif HMI est adapté pour recevoir une entrée de confirmation d'un opérateur du dispositif HMI mobile avant que des données de réponse de serveur transmises au dispositif HMI mobile à partir du serveur de système ne soient fournies à l'application d'IED,
dans lequel la fourniture de données de réponse de serveur à l'application d'IED est interdite sans l'intervention manuelle de l'opérateur du dispositif HMI mobile.

2. Système d'automatisation de sous-station comprenant le dispositif HMI mobile selon la revendication 1 et comprenant en outre :
- le dispositif électronique intelligent IED configuré pour réaliser la fonction de protection de la sous-station et adapté pour échanger des données d'IED par l'intermédiaire du premier canal de communication,
- le serveur de système adapté pour échanger des données de serveur par l'intermédiaire du second canal de communication.

3. Système selon la revendication 2, dans lequel le dispositif HMI présente un premier port de communication sans fil faisant partie du premier canal de communication, et un autre, second port de communication sans fil faisant partie du second canal de communication.

4. Système selon la revendication 2, dans lequel le serveur de système est un serveur de documentation du système d'automatisation, et dans lequel les données de demande de serveur sont fournies par l'application d'IED.

5. Système selon la revendication 2, dans lequel les données de demande de serveur comprennent des données de capteur fournies par un capteur couplé au dispositif HMI mobile, et dans lequel le serveur système est configuré pour analyser les données du capteur et transmettre des données de réponse de serveur en réponse à celles-ci.

6. Système selon l'une quelconque des revendications 2 à 5 comprenant une pluralité d'IED adaptés pour être sélectionnés pour un échange de données avec le dispositif HMI mobile par l'acceptation d'une activation locale au niveau de chaque IED de la pluralité d'IED, par un humain, du premier canal de communication.

7. Système selon l'une quelconque des revendications 2 à 5, dans lequel le serveur de système exécute une application de service configurée pour accepter une entrée par un humain comme données de réponse de serveur.

8. Système selon l'une quelconque des revendications 2 à 5, dans lequel l'IED est dépourvu d'unité d'affichage alphanumérique.
